# EUROPEAN PATENT APPLICATION

(11) **EP 4 513 219 A1**
(43) Date of publication of application: **26.02.2025**
(21) Application number: 22950037.6
(22) Date of filing: 14.10.2022
(51) Int. Cl.: G01S 5/02

(54) **RANGING METHOD AND DEVICE**

(30) Priority: 08.07.2022 CN 202210798144; 20.09.2022 CN 202211145265
(71) Applicant: Huawei Technologies Co., Ltd., Shenzhen, Guangdong 518129 (CN)
(72) Inventor: ZHANG, Huisha, Shenzhen, Guangdong 518129 (CN); WANG, Kang, Shenzhen, Guangdong 518129 (CN)
(74) Representative: Goddar, Heinz J.
(86) International application number: PCT/CN2022/125402
(87) International publication number: WO 2024/007477

(57) **Abstract**

A ranging method and an apparatus are provided. The ranging method is applied to a first communication apparatus, and the first communication apparatus includes a first ultra-wideband system and a first narrowband system. The ranging method includes: The first ultra-wideband system receives ranging configuration information from the first narrowband system, where the ranging configuration information is determined by the first narrowband system and a second narrowband system of a second communication apparatus through negotiation (S310); and the first ultra-wideband system generates a first ranging frame based on the ranging configuration information, where the first ranging frame is used to measure a distance between the first communication apparatus and the second communication apparatus (S320). This can implement a process of ranging between the first communication apparatus and the second communication apparatus in a more secure manner.

## Description

This application claims priorities to Chinese Patent Application No. 202210798144.0, filed with the China National Intellectual Property Administration on July 8, 2022 and entitled "COMMUNICATION METHOD AND APPARATUS"; and to Chinese Patent Application No. 202211145265.1, filed with the China National Intellectual Property Administration on September 20, 2022 and entitled "RANGING METHOD AND APPARATUS", both of which are incorporated herein by reference in their entireties.

### TECHNICAL FIELD

This application relates to the field of communication technologies, and more specifically, to a ranging method and an apparatus.

### BACKGROUND

Compared with the conventional wireless positioning technology, an ultra-wideband (ultra-wideband, UWB) communication system can achieve higher ranging and positioning precision that can reach a centimeter level. Because the UWB communication system uses an impulse with a pulse width of only a nanosecond level as its basic signal, the UWB communication system has characteristics such as a high transmission rate and a large system capacity, and can implement high-precision ranging and positioning.

With continuous update of UWB standards, a scrambled timestamp sequence (scrambled timestamp sequence, STS) is added to a new UWB standard, to enhance security of ranging and positioning. However, the STS needs to be generated through negotiation by a transmitting device and a receiving device through UWB communication system. This may cause a security risk.

### SUMMARY

This application provides a ranging method and a communication apparatus, to implement a process of ranging between a first communication apparatus and a second communication apparatus in a more secure manner.

According to a first aspect, a ranging method is provided. The method is applied to a first communication apparatus. The first communication apparatus includes a first ultra-wideband system and a first narrowband system. The method includes: The first ultra-wideband system receives ranging configuration information from the first narrowband system, where the ranging configuration information is determined by the first narrowband system and a second narrowband system of a second communication apparatus through negotiation; and the first ultra-wideband system generates a first ranging frame based on the ranging configuration information, where the first ranging frame is used to measure a distance between the first communication apparatus and the second communication apparatus.

In the foregoing technical solution, a communication process in which the NB systems of the different communication apparatuses negotiate the ranging configuration information is not easily intercepted by the outside. Therefore, a security level of the communication process in which the NB systems negotiate the ranging configuration information is higher than that of a security level of a communication process in which UWB systems negotiate the ranging configuration information. According to the foregoing technical solution, this application can complete a process of ranging between devices in a more secure manner.

Specifically, in this application, a communication link between the narrowband systems is established, and the narrowband systems negotiate the ranging configuration information, so that a communication link between wideband systems does not need to be established. This can shorten working duration of the wideband system and reduce power consumption. In addition, the wideband system can generate a ranging frame based on the ranging configuration information determined by the narrowband systems through negotiation, and the wideband system does not need to transfer the ranging configuration information to an ultra-wideband system of another communication apparatus. This can reduce a security risk, implement ranging security, and improve secure ranging performance. Therefore, ranging with low power consumption and high precision can be implemented.

With reference to the first aspect, in some implementations of the first aspect, the ranging configuration information includes a ranging key and a ranging parameter.

Specifically, in this application, a modulation code of a ranging sequence can be generated by using the ranging key and the ranging parameter and processing by using an advanced encryption algorithm. This not only improves security, but also does not affect a correlation of the ranging sequence.

With reference to the first aspect, in some implementations of the first aspect, the ranging key includes a session key.

With reference to the first aspect, in some implementations of the first aspect, that the first ultra-wideband system generates a first ranging frame based on the ranging configuration information includes: The first ultra-wideband system generates a ranging sequence based on the ranging key and the ranging parameter; and the first ultra-wideband system generates the first ranging frame based on the ranging sequence and a preamble code.

According to the foregoing technical solution, the UWB system generates the ranging sequence based on the ranging key and the ranging parameter. This can ensure security of the first ranging frame generated by the UWB system based on the ranging sequence, and can complete the process of ranging between devices in a more secure manner.

With reference to the first aspect, in some implementations of the first aspect, that the first ultra-wideband system generates a ranging sequence based on the ranging key and the ranging parameter includes: The first ultra-wideband system generates a ranging sequence value and a ranging sequence key based on the ranging key and the ranging parameter; and the first ultra-wideband system generates the ranging sequence based on the ranging sequence value and the ranging sequence key.

According to the foregoing technical solution, the UWB system generates the ranging sequence value and the ranging sequence key based on the ranging key and the ranging parameter. This can further ensure security of the ranging sequence generated by the UWB system, can ensure the security of the first ranging frame generated by the UWB system based on the ranging sequence, and can complete the process of ranging between devices in a more secure manner.

With reference to the first aspect, in some implementations of the first aspect, that the first ultra-wideband system generates a ranging sequence value and a ranging sequence key based on the ranging key and the ranging parameter includes: The first ultra-wideband system generates the ranging sequence key based on the ranging key and first information, where the first information includes a ranging sequence text, the ranging sequence text is determined based on the ranging key and second information, and the second information is determined based on the ranging parameter; the first ultra-wideband system generates the ranging sequence value based on the ranging key and third information, where the third information includes the ranging sequence text; and the first ultra-wideband system generates the ranging sequence based on the ranging sequence key and the ranging sequence value.

Specifically, the first UWB system may process the ranging key and the ranging parameter that are from the NB system for a plurality of times. This can make a security level of the ranging sequence generated by the UWB system higher, and can complete the process of ranging between devices in a more secure manner.

After generating the ranging sequence, the first UWB system splices the preamble code and the ranging sequence to assemble the first ranging frame, and sends the first ranging frame to a second UWB system, to complete a process of ranging between the UWB systems of the different communication apparatuses.

According to the foregoing technical solution, the UWB system generates the ranging sequence value and the ranging sequence key based on the ranging key and the ranging parameter. This can further ensure the security level of the ranging sequence generated by the UWB system, can ensure the security of the first ranging frame generated by the UWB system based on the ranging sequence, and can complete the process of ranging between devices in a more secure manner.

With reference to the first aspect, in some implementations of the first aspect, the method further includes: The first ultra-wideband system sends the first ranging frame to the second ultra-wideband system of the second communication apparatus; and the first ultra-wideband system receives a second ranging frame from the second ultra-wideband system.

This can implement the ranging between the devices
With reference to the first aspect, in some implementations of the first aspect, the method further includes: The first ultra-wideband system determines a measurement result of the second ranging frame; and the first wideband system sends the measurement result of the second ranging frame to the first narrowband system.

The ultra-wideband system sends the measurement result of the ranging frame determined by the ultra-wideband system to the narrowband system, which can prevent the ultra-wideband system from broadcasting the measurement result of the ranging frame. This can shorten working duration of the ultra-wideband system and reduce power consumption.

With reference to the first aspect, in some implementations of the first aspect, the method further includes: The first narrowband system sends the measurement result of the second ranging frame to the second narrowband system.

The narrowband system broadcasts the measurement result of the ranging frame. This can shorten the working duration of the ultra-wideband system and reduce the power consumption.

With reference to the first aspect, in some implementations of the first aspect, before the first ultra-wideband system receives the ranging configuration information, the method further includes: The first narrowband system sends fourth information to the second narrowband system, where the fourth information includes the ranging key and the ranging parameter; or the fourth information includes information used to generate the ranging key and the ranging parameter.

The narrowband systems negotiate the ranging configuration information. This can reduce a security risk that the ranging configuration information is obtained by the outside, thereby increasing a security level of the ranging configuration information, and completing the process of ranging between devices in a more secure manner.

According to a second aspect, a communication method is provided. The method may be performed by a wideband system, or may be performed by a component (for example, a chip or a circuit) of the wideband system. This is not limited. For ease of description, the following uses an example in which the method is performed by the wideband system for description.

The method may include: The wideband system receives a session key and a negotiated ranging parameter from a narrowband system; the wideband system generates a secure ranging sequence based on the session key and the negotiated ranging parameter; and the wideband system performs ranging between devices based on the secure ranging sequence.

Based on the foregoing technical solution, the wideband system may generate the secure ranging sequence based on the session key and the negotiated ranging parameter, and perform ranging between devices based on the secure ranging sequence. The method can reduce power consumption of wideband, improve secure ranging performance, and implement ranging with low power consumption and high precision.

According to a third aspect, a communication apparatus is provided. The communication apparatus includes a first ultra-wideband system and a first narrowband system. The first ultra-wideband system includes a first transceiver module and a first processing module. The first transceiver module is configured to receive ranging configuration information from the first narrowband system, where the ranging configuration information is determined by the first narrowband system and a second narrowband system of a second communication apparatus through negotiation. The first processing module is configured to generate a first ranging frame based on the ranging configuration information, where the first ranging frame is used to measure a distance between the communication apparatus and the second communication apparatus.

With reference to the third aspect, in some implementations of the third aspect, the ranging configuration information includes a ranging key and a ranging parameter.

With reference to the third aspect, in some implementations of the third aspect, the ranging key includes a session key.

With reference to the third aspect, in some implementations of the third aspect, the first processing module is configured to generate a ranging sequence based on the ranging key and the ranging parameter; and the first processing module is further configured to generate the first ranging frame based on the ranging sequence and a preamble code.

With reference to the third aspect, in some implementations of the third aspect, the first processing module is configured to generate a ranging sequence value and a ranging sequence key based on the ranging key and the ranging parameter; and the first processing module is configured to generate the ranging sequence based on the ranging sequence value and the ranging sequence key.

With reference to the third aspect, in some implementations of the third aspect, the first processing module is configured to generate the ranging sequence key based on the ranging key and first information, where the first information includes a ranging sequence text, the ranging sequence text is determined based on the ranging key and second information, and the second information is determined based on the ranging parameter; the first processing module is further configured to generate the ranging sequence value based on the ranging key and third information, where the third information includes the ranging sequence text; and the first processing module is further configured to generate the ranging sequence based on the ranging sequence key and the ranging sequence value.

With reference to the third aspect, in some implementations of the third aspect, the first transceiver module is further configured to send the first ranging frame to a second ultra-wideband system of the second communication apparatus; and the first transceiver module is further configured to receive a second ranging frame from the second ultra-wideband system.

With reference to the third aspect, in some implementations of the third aspect, the first processing module is further configured to determine a measurement result of the second ranging frame; and the first transceiver module is further configured to send the measurement result of the second ranging frame to the first narrowband system.

With reference to the third aspect, in some implementations of the third aspect, the first narrowband system includes a second transceiver module, where the second transceiver module is configured to send the measurement result of the second ranging frame to the second narrowband system.

With reference to the third aspect, in some implementations of the third aspect, the second transceiver module is further configured to send fourth information to the second narrowband system, where the fourth information includes the ranging key and the ranging parameter; or the fourth information includes information used to generate the ranging key and the ranging parameter.

According to a fourth aspect, a communication apparatus is provided. The apparatus is configured to perform the method in possible implementations of the second aspect. Specifically, the apparatus may include a unit and/or a module configured to perform the method in the possible implementations of the second aspect, such as a processing unit and/or a communication unit.

In an implementation, the apparatus is a wideband system. When the apparatus is the wideband system, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used for a wideband system. When the apparatus is the chip, the chip system, or the circuit used for the wideband system, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a fifth aspect, a communication apparatus is provided, including a processor. The processor is coupled to a memory, and the processor is configured to execute a computer program or instructions, so that the communication apparatus performs the method according to any one of the first aspect and the possible implementations of the first aspect, or performs the method according to any one of the second aspect and the possible implementations of the second aspect.

According to a sixth aspect, a communication apparatus is provided, including a logic circuit and an input/output interface. The logic circuit is configured to execute a computer program or instructions, so that the communication apparatus performs the method according to any one of the first aspect and the possible implementations of the first aspect, or performs the method according to any one of the second aspect and the possible implementations of the second aspect.

According to a seventh aspect, a computer-readable storage medium is provided, including a computer program or instructions. When the computer program or the instructions are run on a computer, the computer is enabled to perform the method according to any one of the first aspect and the possible implementations of the first aspect, or perform the method according to any one of the second aspect and the possible implementations of the second aspect.

According to an eighth aspect, a computer program product is provided, including instructions. When the instructions are run on a computer, the computer is enabled to perform the method according to any one of the first aspect and the possible implementations of the first aspect, or perform the method according to any one of the second aspect and the possible implementations of the second aspect.

### BRIEF DESCRIPTION OF DRAWINGS

FIG. 1 is a diagram of a ranging procedure based on a UWB system;
FIG. 2 is a diagram of a communication system 200 to which an embodiment of this application is applicable;
FIG. 3 is a schematic interaction flowchart of a ranging method 300 according to an embodiment of this application;
FIG. 4 is a schematic interaction flowchart of a ranging method 400 according to an embodiment of this application;
FIG. 5 is a schematic interaction flowchart of a ranging method 500 according to an embodiment of this application;
FIG. 6 is a schematic interaction flowchart of a ranging method 600 according to an embodiment of this application;
FIG. 7 is a schematic interaction flowchart of a ranging method 700 according to an embodiment of this application;
FIG. 8 is a block diagram of a structure of a communication apparatus 800 according to an embodiment of this application;
FIG. 9 is a block diagram of a structure of a communication apparatus 900 according to an embodiment of this application;
FIG. 10 is a block diagram of a structure of a communication apparatus 1000 according to an embodiment of this application;
FIG. 11 is a block diagram of a structure of a communication apparatus 1100 according to an embodiment of this application; and
FIG. 12 is a block diagram of a structure of a communication apparatus 1200 according to an embodiment of this application.

### DESCRIPTION OF EMBODIMENTS

The following describes technical solutions of this application with reference to accompanying drawings.

The technical solutions of this application may be applied to a wireless personal area network (wireless personal area network, WPAN). Currently, a standard used for the WPAN is the institute of electrical and electronics engineers (institute of electrical and electronics engineers, IEEE) 802.15 series. The WPAN may be used for communication between digital auxiliary devices in a small range, such as telephones, computers, and auxiliary devices. Technologies supporting the wireless personal area network include Bluetooth (Bluetooth), ZigBee (ZigBee), ultra-wideband (ultra-wideband, UWB), an infrared data association (infrared data association, IrDA) connection technology, home radio frequency (home radio frequency, HomeRF), and the like. From a perspective of network composition, the WPAN is located at a bottom layer of an entire network architecture and is used for a wireless connection between devices in a small range, that is, a point-to-point short-distance connection, and may be considered as a short-distance wireless communication network. Based on different application scenarios, WPANs are further classified into a high rate (high rate, HR)-WPAN and a low rate (low rate, LR)-WPAN. The HR-WPAN may be used to support various high-rate multimedia applications, including high-quality audio and video delivery, multi-megabyte music and image document transmission, and the like. The LR-WPAN may be for common services in daily life.

In the WPAN, devices may be classified into a full-function device (full-function device, FFD) and a reduced-function device (reduced-function device, RFD) based on communication capabilities of the devices. FFDs can communicate with each other, and an FFD can communicate with an RFD. RFDs cannot directly communicate with each other. An RFD can communicate only with an FFD or forward data through one FFD. An FFD associated with an RFD is referred to as a coordinator (coordinator) of the RFD. The RFD device is mainly used for a simple control application, for example, a light switch and a passive infrared sensor. A small amount of data is transmitted, and small quantities of transmission resources and communication resources are occupied. Therefore, costs of the RFD are low. The coordinator may also be referred to as a personal area network (personal area network, PAN) coordinator, a central control node, or the like. The PAN coordinator is a main control node of an entire network, and each ad hoc network generally has only one PAN coordinator that has functions of member identity management, link information management, and packet forwarding.

Optionally, a device (for example, a sending device or a receiving device) in embodiments of this application may be a device supporting the 802.15 series, for example, a device supporting a plurality of WPAN standards such as 802.15.4a, 802.15.4z, a WPAN standard under discussion, or a WPAN standard in a subsequent version.

Optionally, this application may be applied to a UWB-based wireless personal area network system, including an 802.15 series protocol, for example, an 802.15.4a protocol, an 802.15.4z protocol, or an 802.15.4ab protocol, and may also support a next-generation Wi-Fi protocol, for example, 802.11be, Wi-Fi 7, or EHT, of IEEE 802.11ax, and 802.11b.

In embodiments of this application, the device may be a communication server, a router, a switch, a bridge, a computer, a mobile phone, a home smart device, a vehicle-mounted communication device, or the like.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specially limited in embodiments of this application, provided that a program that records code of the method provided in embodiments of this application can be run to perform communication according to the method provided in embodiments of this application. For example, the method provided in embodiments of this application may be performed by the FFD or the RFD, or a functional module that can invoke and execute a program and that is in the FFD or the RFD.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk, a floppy disk or a magnetic tape), an optical disc (for example, a compact disc (compact disc, CD), and a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include, and/or carry instructions and/or data.

The technical solutions of this application may be further applicable to a wireless local area network system such as an internet of things (internet of things, IOT) network or a vehicle-to-everything (vehicle to x, V2X) network. This application may be further applicable to another possible communication system, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5^{th} generation (5^{th} generation, 5G) communication system, and a 6^{th} generation (6^{th} generation, 6G) communication system.

The foregoing communication systems to which this application is applicable are merely examples for description, and communication systems to which this application is applicable are not limited thereto. This is uniformly described herein, and details are not described below again.

In the WPAN, in a UWB technology, data transmission is performed through a nanosecond-level non-sinusoidal narrow impulse, so that a wide spectrum range is occupied. Because of its narrow impulse and extremely low radiation spectral density, the UWB has advantages of strong multi-path resolution capability, low power consumption, high confidentiality, and the like.

With the development of science and technologies, a ranging (or positioning) technology is applied increasingly widely. A conventional global positioning system (global positioning system, GPS) needs to receive a satellite signal, but cannot receive a satellite signal in indoor positioning application, so positioning cannot be implemented. In a current indoor positioning application scenario, for example, industrial workshop positioning, mobile phone ranging, and object searching, high-precision ranging and positioning are generally completed based on UWB.

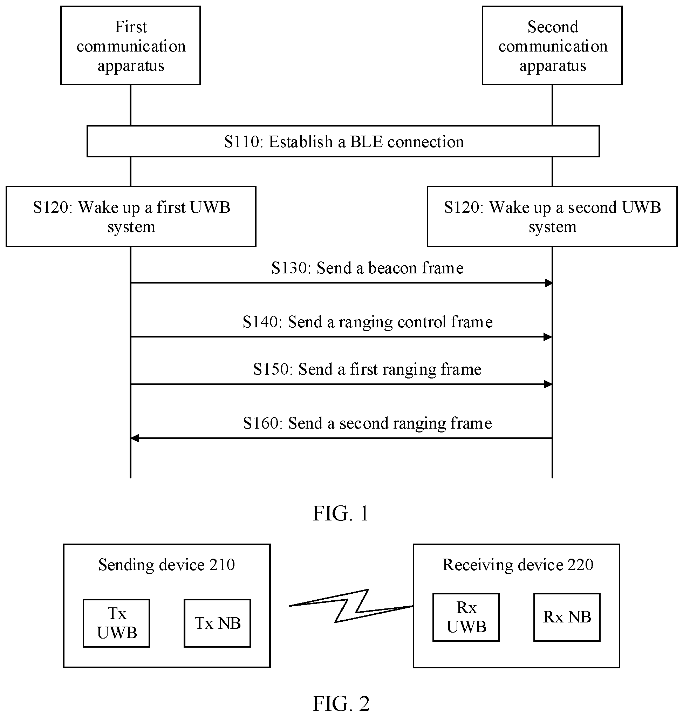

FIG. 1 is a diagram of a ranging procedure based on a UWB system. As shown in FIG. 1, the ranging procedure relates to interaction between a first communication apparatus and a second communication apparatus. The ranging procedure includes:
S110: Establish a Bluetooth low energy (Bluetooth low energy, BLE) connection between the first communication apparatus and the second communication apparatus.

The established BLE connection between the first communication apparatus and the second communication apparatus is used to wake up respective UWB systems.

S120: Wake up a first UWB system and wake up a second UWB system.

The first UWB system of the first communication apparatus is woken up because of the BLE connection between the first communication apparatus and the second communication apparatus, and the second UWB system of the second communication apparatus is also woken up because of the BLE connection between the second communication apparatus and the first communication apparatus. After being woken up, the first UWB system and the second UWB system are initialized separately. For example, both the first UWB system and the second UWB system may apply a default parameter. For example, the default parameter may include a quantity of channels (channel number), a preamble code (preamble code), a rate, and the like that are defined during initialization.

After the respective UWB systems of the first communication apparatus and the second communication apparatus are woken up, the first UWB system and the second UWB system may perform networking and ranging.

S130: The first communication apparatus sends a beacon (beacon) frame to the second communication apparatus.

Correspondingly, the second communication apparatus receives the beacon frame from the first communication apparatus.

The beacon frame sent by the first communication apparatus to the second communication apparatus indicates whether the second communication apparatus needs a ranging contention access period (ranging contention access period, RCAP) and a ranging contention-free period (ranging contention-free period, RCFP). If the second communication apparatus needs the RCAP and the RCFP, the second communication apparatus may access, in this period, a WPAN established by the first communication apparatus. If the second communication apparatus does not need the RCAP and the RCFP, the first communication apparatus may maintain the current WPAN and a related device in the WPAN.

In the RCAP, the second communication apparatus may access the WPAN established by the first communication apparatus. In the RCFP, the first communication apparatus and the second communication apparatus may complete timeslot allocation information required for necessary inter-device interaction.

The second communication apparatus may complete access to the WPAN in the foregoing ranging contention access period. The first communication apparatus and the second communication apparatus may complete device interaction in the foregoing ranging contention-free period.

The first communication apparatus sends the beacon frame to the second communication apparatus, so that broadcasting of a ranging-related parameter and time synchronization in the WPAN established by the first communication apparatus can be implemented. After receiving the beacon frame, the second communication apparatus may join, as required, the WPAN established by the first communication apparatus.

S140: The first communication apparatus sends a ranging control message (ranging control message, RCM) frame to the second communication apparatus.

Correspondingly, the second communication apparatus receives the RCM frame sent by the first communication apparatus.

The first communication apparatus sends the RCM frame to the second communication apparatus, to complete management and allocation of a ranging period (ranging period) between the first communication apparatus and the second communication apparatus.

Specifically, the RCM frame may include:
(1) timeslot allocation information: The first communication apparatus may allocate time based on time division multiple access (time division multiple address, TDMA), and define four roles involved in a ranging process; and
(2) secure ranging information: The first communication apparatus derives a value (value) (for example, V1/V2/V3/V Counter) and an STS key (key) that are used for generating an STS, and assembles the value and the STS key into a ranging STS key data information element (ranging STS key data information element, RSKD IE).

Generally, the ranging process involves four roles in all: a ranging controller (controller), a ranging controlee (controlee), a ranging initiator (initiator), and a ranging responder (responder). The first communication apparatus may serve as both the ranging controller and the ranging initiator, and the second communication apparatus may serve as both the ranging controlee and the ranging responder. The first communication apparatus implements ranging with the second communication apparatus.

Specifically, a process of ranging between the first communication apparatus and the second communication apparatus is performed by the first communication apparatus and the second communication apparatus based on a ranging period allocated based on TDMA.

S150: The first communication apparatus sends a first ranging frame to the second communication apparatus.

Correspondingly, the second communication apparatus receives the first ranging frame from the first communication apparatus.

Specifically, the first ranging frame sent by the first communication apparatus to the second communication apparatus includes an STS and a preamble code. Generation of the STS is related to the foregoing STS value (for example, V1/V2/V3/V Counter) and the STS key.

S160: The second communication apparatus sends a second ranging frame to the first communication apparatus.

Correspondingly, the first communication apparatus receives the second ranging frame from the second communication apparatus.

Specifically, after receiving the first ranging frame sent by the first communication apparatus, the second communication apparatus sends the second ranging frame to the first communication apparatus. In this way, the first communication apparatus and the second communication apparatus may calculate a time of flight (time of flight, TOF) of the ranging frame of each of the first communication apparatus and the second communication apparatus, and then complete ranging between the devices.

After the first communication apparatus and the second communication apparatus each calculate the TOF, the first UWB system may broadcast a ranging result determined by the first UWB system to the second UWB system. The second UWB system may also broadcast a ranging result determined by the second UWB system to the first UWB system.

It should be understood that after the UWB systems are woken up, the subsequent S130 to S160 are all completed by the UWB systems.

It can be learned from the foregoing descriptions that, the generation of the STS requires that the UWB system of the first communication apparatus and the UWB system of the second communication apparatus complete negotiation of an STS value and an STS key, and an STS value and an STS key that are generated by a ranging controller are assembled into an RSKD IE and transferred to another device (for example, a ranging controlee). However, a process in which the UWB systems negotiate the STS value and the STS key is easily intercepted, resulting a security risk.

In view of the foregoing technical problem, this application provides a ranging method, to complete a process of ranging between devices in a more secure manner.

Before the ranging method in embodiments of this application is described, the following first describes a diagram of an architecture of a communication system to which embodiments of this application are applicable. For details, refer to FIG. 2.

FIG. 2 is a diagram of an architecture of a communication system 200 to which an embodiment of this application is applicable. As shown in FIG. 2, the communication system 200 at least includes one sending device 210 and one receiving device 220. The sending device 210 and the receiving device 220 may communicate with each other by using a UWB technology, or may communicate with each other by using a narrowband (narrowband, NB) technology. The sending device 210 and the receiving device 220 each may include a UWB signal processing module and an NB signal processing module. For example, the sending device 210 includes a UWB signal sending module and an NB signal sending module. The receiving device 220 includes a UWB signal receiving module and an NB signal receiving module.

FIG. 2 is described only by using an example in which the communication system 200 includes one sending device and one receiving device. However, the communication system 200 is not limited to including more other devices. For example, the communication system 200 may further include more receiving devices. In addition, in this embodiment of this application, the sending device is a device that sends a UWB signal, and the receiving device is a device that receives a UWB signal.

Optionally, the sending device 210 and the receiving device 220 may be used in a plurality of possible application scenarios, for example, are applied to a star topology or a peer-to-peer topology, are applicable to data communication between one or more other devices and a central control node in the star topology, and are also applicable to communication between different devices in the peer-to-peer topology.

The following describes the ranging method in embodiments of this application with reference to the accompanying drawings.

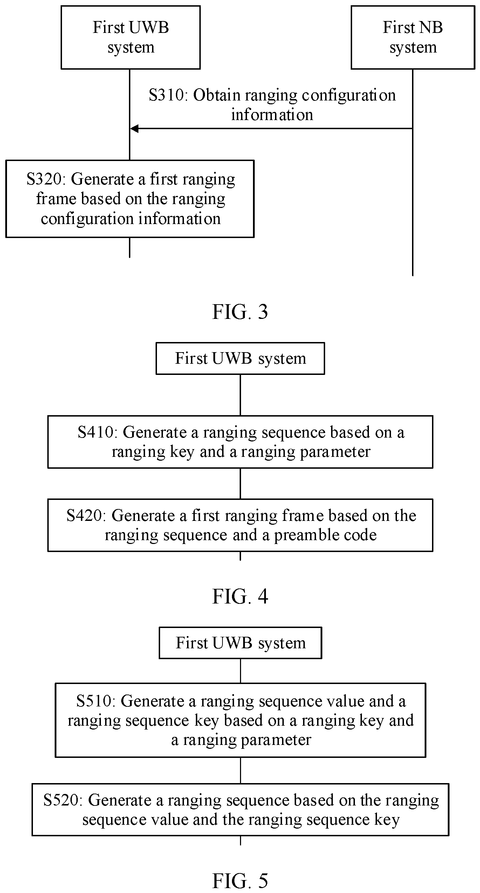

FIG. 3 is a schematic interaction flowchart of a ranging method 300 according to an embodiment of this application. The method procedure in FIG. 3 may be performed by a sending device/receiving device, or may be performed by a module and/or a component (for example, a chip or an integrated circuit) that is installed in the sending device/receiving device and that has a corresponding function. This is not limited. The following embodiment is described by using the sending device/receiving device as an example. The ranging method 300 includes:
S310: A first UWB system receives ranging configuration information from a first NB system, where the ranging configuration information is determined by the first NB system and a second NB system through negotiation.

Specifically, a first communication apparatus includes the first UWB system and the first NB system (refer to the sending device 210 in FIG. 2), and a second communication apparatus includes a second UWB system and the second NB system (refer to the receiving device 220 in FIG. 2). A communication link between the first NB system and the second NB system can be established. The communication link is used by the first NB system and the second NB system to exchange ranging-related information, for example, a ranging parameter and a ranging key. During interaction between the first NB system and the second NB system, the first NB system and the second NB system may determine the ranging configuration information used by the UWB system to generate a ranging frame.

In a possible implementation, the ranging configuration information includes a ranging key and a ranging parameter. The ranging key is used to ensure security of a process of generating the ranging frame. Specifically, in this application, a modulation code of a ranging sequence can be generated by using the ranging key and the ranging parameter and processing according to an advanced encryption algorithm. This not only improves security, but also does not affect a correlation of the ranging sequence.

Optionally, the ranging configuration information may further include the ranging sequence. For example, the first NB system sends, to the first UWB system, the ranging sequence determined by the first NB system and the second NB system through negotiation. In this way, the first UWB system may directly send the ranging sequence. For another example, the first NB system may generate the ranging sequence based on the ranging key and the ranging parameter that are determined by the first NB system and the second NB system through negotiation, and send the ranging sequence to the first UWB system. In this way, the first UWB system may directly send the ranging sequence.

Optionally, the ranging key may include a session key (session key), or may include another type of key. This is not limited in this application.

Optionally, the ranging parameter may include content such as a ranging method (rangingMethod), a ranging role, a frame parameter, a channel identifier (channelId), a preamble code length (preambleCodeLength), a preamble code index (preambleCodeIndex), and a session index (sessionId).

Because of the interaction between the first NB system and the second NB system, the first UWB system and the second UWB system may have same ranging configuration information. In this way, the first UWB system and the second UWB system can be prevented from negotiating generation of the ranging configuration information, thereby ensuring security of a process of ranging between the first communication apparatus and the second communication apparatus.

It can be learned from the foregoing that, after negotiating the ranging configuration information, the first NB system and the second NB system each may send the ranging configuration information determined through negotiation to their respective UWB system through an internal signaling transmission channel, and the respective UWB system may generate a ranging frame based on the ranging configuration information. For example, the first NB system sends the ranging configuration information to the first UWB system, and the first UWB system generates a first ranging frame based on the ranging configuration information. For another example, the second NB system sends the ranging configuration information to the second UWB system, and the second UWB system generates a second ranging frame based on the ranging configuration information.

S320: The first UWB system generates the first ranging frame based on the ranging configuration information.

It can be learned from the foregoing descriptions that, after receiving the ranging configuration information determined by the first NB system and the second NB system through negotiation, the first UWB system may generate the first ranging frame based on the ranging configuration information.

Specifically, the ranging configuration information used by the UWB system to generate the ranging frame may be determined by the first NB system of the first communication apparatus and the first NB system of the second communication apparatus through negotiation. Then, the first UWB system of the first communication apparatus may generate the first ranging frame based on the ranging configuration information. In this way, the first UWB system of the first communication apparatus and the second UWB system of the second communication apparatus do not need to perform plaintext negotiation on a parameter related to generation of the ranging frame, which can ensure the security of the process of ranging between the first communication apparatus and the second communication apparatus.

In the foregoing technical solution, a communication process in which the NB systems of the different communication apparatuses negotiate the ranging configuration information is not easily intercepted by the outside. A security level of the communication process in which the NB systems negotiate the ranging configuration information is higher than that of a security level of a communication process in which the UWB systems negotiate the ranging configuration information. Therefore, according to the foregoing technical solutions, this application can complete a process of ranging between devices in a more secure manner.

Because the UWB systems of the communication apparatuses do not need to negotiate a process of generating the ranging configuration information, the UWB system can be prevented from being in a working state for a long time, thereby reducing power consumption.

Specifically, in this application, the communication link between the narrowband systems is established, and the narrowband systems negotiate the ranging configuration information, so that a communication link between wideband systems does not need to be established. This can shorten working duration of the wideband system and reduce power consumption. In addition, the wideband system can generate the ranging frame based on the ranging configuration information determined by the narrowband systems through negotiation. This can reduce a security risk, implement ranging security, and improve secure ranging performance. Therefore, ranging with low power consumption and high precision can be implemented.

The following further describes the technical solution shown in FIG. 3 with reference to FIG. 4.

FIG. 4 is a schematic interaction flowchart of a ranging method 400 according to an embodiment of this application. The method procedure in FIG. 4 may be performed by a sending device/receiving device, or may be performed by a module and/or a component (for example, a chip or an integrated circuit) that is installed in the sending device/receiving device and that has a corresponding function. This is not limited. The following embodiment is described by using the sending device/receiving device as an example. The ranging method 400 includes:
S410: The first UWB system generates a ranging sequence based on the ranging key and the ranging parameter.

Specifically, after establishing the communication link, the first NB system and the second NB system may negotiate the ranging key and the ranging parameter. Then, the first UWB system can receive the ranging key and the ranging parameter through the internal signaling transmission channel.

In a possible implementation, the first UWB system may assemble the ranging parameter into a first input text (input context) whose bit length is 128 bits, and assemble the ranging key into a second input text whose bit length is 128 bits or 256 bits. Then, the first UWB system inputs the first input text and the second input text into a ranging sequence generation module, and the ranging sequence generation module outputs the ranging sequence.

It should be understood that the ranging sequence generation module may perform calculation or processing on the first input text and the second input text to generate the ranging sequence. A specific manner of processing the first input text and the second input text by the ranging sequence generation module is not limited in this application.

S420: The first UWB system generates the first ranging frame based on the ranging sequence and a preamble code.

After the ranging sequence generation module outputs the ranging sequence, the first UWB system may combine the ranging sequence and the preamble code to generate the first ranging frame. Specifically, after generating the ranging sequence, the first UWB system splices the preamble code and the ranging sequence to assemble the first ranging frame, and then sends the first ranging frame to the second UWB system, to finally complete a process of ranging between the UWB system of the first communication apparatus and the UWB system of the second communication apparatus.

In a possible implementation, the ranging sequence may include an STS, or may include an impulse response training sequence (channel impulse response training sequence, CTS), or may include another type of sequence used for ranging. This is not limited in this application.

In a possible implementation, the first input text may be assembled in a manner shown in Table 1. Table 1 is as follows.

**Table 1**

| | | | | | |
|---|---|---|---|---|---|
| channelId | rangingMethod | preambleCodeLength | preambleCodeIndex | sessionId | ... |

For the parameters shown in Table 1, refer to the foregoing descriptions of the ranging parameter. Details are not described herein again.

In addition, a specific composition form of the second input text is not limited in embodiments of this application.

According to the foregoing technical solution, the UWB system generates the ranging sequence based on the ranging key and the ranging parameter. This can ensure security and a level of the first ranging frame generated by the UWB system based on the ranging sequence, and can complete the process of ranging between devices in a more secure manner.

The following further describes the technical solution shown in FIG. 4 with reference to FIG. 5.

FIG. 5 is a schematic interaction flowchart of a ranging method 500 according to an embodiment of this application. The method procedure in FIG. 5 may be performed by a sending device/receiving device, or may be performed by a module and/or a component (for example, a chip or an integrated circuit) that is installed in the sending device/receiving device and that has a corresponding function. This is not limited. The following embodiment is described by using the sending device/receiving device as an example. The ranging method 500 includes:
S510: The first UWB system generates a ranging sequence value and a ranging sequence key based on the ranging key and the ranging parameter.

Specifically, the first UWB system inputs the first input text and the second input text to a key derivation module, and the key derivation module outputs the ranging sequence value (value) and the ranging sequence key (key). A bit length of the ranging sequence value may be 128 bits, and a bit length of the ranging sequence key may be 128 bits or 256 bits. This is not limited in this application.

The key derivation module may perform calculation or processing on the first input text and the second input text, to generate the ranging sequence value and the ranging sequence key. A specific manner of processing the first input text and the second input text by the key derivation module is not limited in this application.

S520: The first UWB system generates the ranging sequence based on the ranging sequence value and the ranging sequence key.

After the key derivation module outputs the ranging sequence value and the ranging sequence key, the first UWB system may input the ranging sequence value and the ranging sequence key to the ranging sequence generation module, and the ranging sequence generation module processes the ranging sequence value and the ranging sequence key, and outputs the ranging sequence. Then, the first UWB system combines the ranging sequence output by the ranging sequence generation module and the preamble code, and generates the first ranging frame.

Specifically, after generating the ranging sequence, the first UWB system splices the preamble code and the ranging sequence to assemble the first ranging frame, and sends the first ranging frame to the second UWB system, to complete the process of ranging between the UWB systems of the different communication apparatuses.

According to the foregoing technical solution, the UWB system generates the ranging sequence value and the ranging sequence key based on the ranging key and the ranging parameter. This can further ensure a security level of the ranging sequence generated by the UWB system, can ensure the security of the first ranging frame generated by the UWB system based on the ranging sequence, and can complete the process of ranging between devices in a more secure manner.

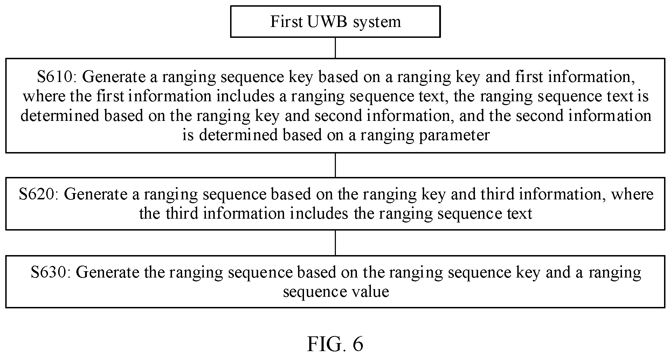

The following further describes the technical solution shown in FIG. 5 with reference to FIG. 6.

FIG. 6 is a schematic interaction flowchart of a ranging method 600 according to an embodiment of this application. The method procedure in FIG. 6 may be performed by a sending device/receiving device, or may be performed by a module and/or a component (for example, a chip or an integrated circuit) that is installed in the sending device/receiving device and that has a corresponding function. This is not limited. The following embodiment is described by using the sending device/receiving device as an example. The ranging method 600 includes:
S610: The first UWB system generates the ranging sequence key based on the ranging key and first information, where the first information includes a ranging sequence text, the ranging sequence text is determined based on the ranging key and second information, and the second information is determined based on the ranging parameter.

Specifically, the first UWB system generates the second information based on the ranging parameter from the first NB system, generates the ranging sequence text based on the second information and the ranging key, and then generates the first information.

Further, the first UWB system generates the ranging sequence key based on the first information and the ranging key. According to the foregoing procedures, the ranging sequence key generated by the first UWB has a high security level.

In a possible implementation, composition of the second information may be shown in Table 2.

**Table 2**

| Counter | Label | Input context | L |
|---|---|---|---|
| 32 bits | 64 bits | 128 bits | 32 bits |

In Table 2, for example, the counter may indicate a quantity of rounds of a block cipher-based message authentication code (cipher-based message authentication code, CMAC), the quantity of rounds of the CMAC may be 1, the label may be used to specify a purpose of output (output) of the CMAC, the input context indicates the ranging parameter, and L indicates a bit width of output. The CMAC is used for key derivation function (key derivation function, KDF) processing.

It can be learned from the foregoing descriptions that a bit length of the second information is 256 bits. However, the bit length is merely used as an example for description, and is not limited.

In addition, the ranging sequence text is generated by the first UWB system based on the ranging key and the second information. The generation process may be as follows: The first UWB system performs KDF processing on the ranging key and the second information to obtain the ranging sequence text. For example, a bit length of the ranging sequence text is 128 bits. The first information includes the ranging sequence text, and a bit length of the first information may be 256 bits.

After determining the foregoing multiple parameters, the first UWB system may perform KDF processing on the ranging key and the first information, and then obtain the ranging sequence key. A bit length of the ranging sequence key may be 128 bits or 256 bits.

Composition of the first information may be shown in Table 2. Details are not described herein again.

S620: The first UWB system generates the ranging sequence value based on the ranging key and third information, where the third information includes the ranging sequence text.

Specifically, composition of the third information may also be shown in Table 2. A bit length of the third information is also 256 bits.

The first UWB system may perform KDF processing on the ranging key and the third information to generate the ranging sequence value. A bit length of the ranging sequence value may be 128 bits.

S630: The first UWB system generates the ranging sequence based on the ranging sequence key and the ranging sequence value.

After determining the parameters listed above, the first UWB system may generate the ranging sequence based on the parameters.

Specifically, the first UWB system may process the ranging key and the ranging parameter that are from the NB system for a plurality of times. This can make the security level of the ranging sequence generated by the UWB system higher, and can complete the process of ranging between devices in a more secure manner.

After generating the ranging sequence, the first UWB system splices the preamble code and the ranging sequence to assemble the first ranging frame, and sends the first ranging frame to the second UWB system, to complete the process of ranging between the UWB systems of the different communication apparatuses.

According to the foregoing technical solution, the UWB system generates the ranging sequence value and the ranging sequence key based on the ranging key and the ranging parameter. This can further ensure the security level of the ranging sequence generated by the UWB system, can ensure the security of the first ranging frame generated by the UWB system based on the ranging sequence, and can complete the process of ranging between devices in a more secure manner.

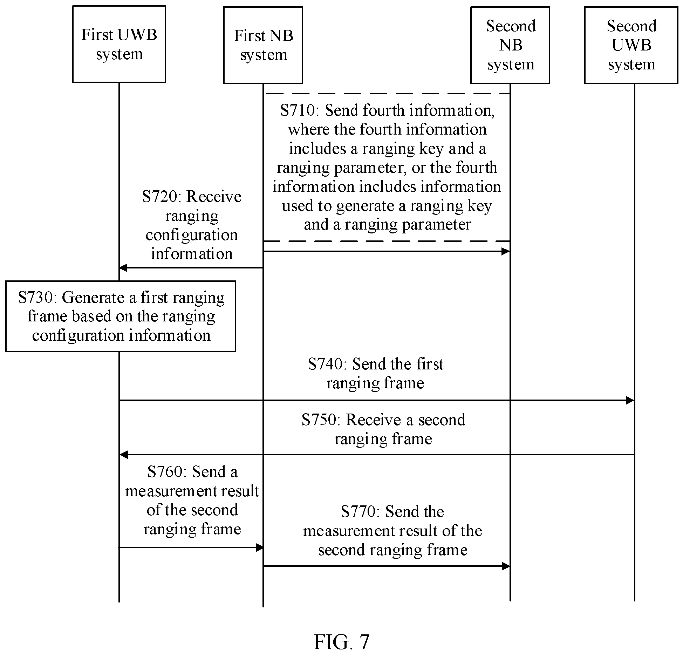

The following describes another ranging method in an embodiment of this application with reference to FIG. 7.

FIG. 7 is a schematic interaction flowchart of a ranging method 700 according to an embodiment of this application. The method procedure in FIG. 7 may be performed by a sending device and a receiving device, or may be performed by modules and/or components (for example, chips or integrated circuits) that are installed in the sending device and the receiving device and that have corresponding functions. This is not limited. The following embodiment is described by using the sending device and the receiving device as an example. The ranging method 700 includes:
Optionally, S710: A first NB system sends fourth information to a second NB system, where the fourth information includes a ranging key and a ranging parameter, or the fourth information includes information used to generate a ranging key and a ranging parameter.

Simply speaking, a communication link between the first NB system of a first communication apparatus and the second NB system of a second communication apparatus may be established. The communication link is used by the first NB system and the second NB system to determine ranging configuration information through negotiation. For example, the first NB system directly sends the ranging parameter and the ranging key to the second NB system, or the first NB system sends, to the second NB system, the information used to generate the ranging parameter and the ranging key. In this way, the first NB system and the second NB system may determine the ranging key and the ranging parameter through negotiation.

The NB systems negotiate the ranging configuration information. This can reduce a security risk that the ranging configuration information is obtained by the outside, thereby increasing a security level of the ranging configuration information, and completing a process of ranging between devices in a more secure manner.

Optionally, the second NB system may also send the fourth information to the first NB system.

S720: A first UWB system receives the ranging configuration information from the first NB system.

For specific descriptions, refer to the content of S310. Details are not described herein again.

S730: The first UWB system generates a first ranging frame based on the ranging configuration information.

For specific descriptions, refer to the content of S320. Details are not described herein again.

S740: The first UWB system sends the first ranging frame to a second UWB system.

Correspondingly, the second UWB system receives the first ranging frame from the first UWB system.

Specifically, the second UWB system may measure the first ranging frame, and determine a TOF of the first ranging frame.

This can implement the ranging between the devices

S750: The second UWB system sends a second ranging frame to the first UWB system.

Correspondingly, the first UWB system receives the second ranging frame from the second UWB system.

Specifically, the first UWB system may measure the second ranging frame, and determine a TOF of the second ranging frame. For a manner of generating the second ranging frame, refer to the manner of generating the first ranging frame. Details are not described herein again.

S760: The first UWB system sends a measurement result of the second ranging frame to the first NB system.

Correspondingly, the first NB system receives the measurement result of the second ranging frame from the first UWB system.

After determining the measurement result of the second ranging frame, the first UWB system does not directly send the measurement result of the second ranging frame to the second UWB system, but sends the measurement result of the second ranging frame to the first NB system. In this way, the first UWB system is only responsible for generating and sending the ranging frame, and is not responsible for sending the measurement result of the ranging frame. This can reduce power consumption.

The UWB system sends the measurement result of the ranging frame determined by the ultra-wideband system to the NB system, which can prevent the UWB system from broadcasting the measurement result of the ranging frame. This can shorten working duration of the UWB system and reduce power consumption.

S770: The first NB system sends the measurement result of the second ranging frame to the second NB system.

Correspondingly, the second NB system receives the measurement result of the second ranging frame sent by the first NB system.

The NB system broadcasts the measurement result of the ranging frame. This can shorten the working duration of the UWB system and reduce the power consumption.

It may be understood that the second NB system may also send a measurement result of the first ranging frame to the first NB system. The second UWB system may also send the measurement result of the first ranging frame to the second NB system.

According to the foregoing technical solutions, this application supports completing the process of ranging between the devices in a more secure manner. In addition, the UWB system is only responsible for generating and sending the ranging frame, and is not responsible for negotiating the ranging configuration information and broadcasting the measurement result of the ranging frame. This can shorten the working duration of the UWB system and reduce the power consumption. In addition, the UWB system can generate the ranging frame based on the ranging configuration information determined by the NB systems through negotiation. This can reduce a security risk, implement ranging security, and improve secure ranging performance. Therefore, ranging with low power consumption and high precision can be implemented.

The foregoing describes the method embodiments in embodiments of this application, and the following describes corresponding apparatus embodiments.

To implement various functions in the foregoing methods provided in embodiments of this application, a terminal and a network device each may include a hardware structure and/or a software module, to implement the functions in a form of the hardware structure, the software module, or a combination of the hardware structure and the software module. Whether a function in the foregoing functions is implemented by the hardware structure, the software module, or the combination of the hardware structure and the software module depends on particular applications and design constraints of the technical solutions.

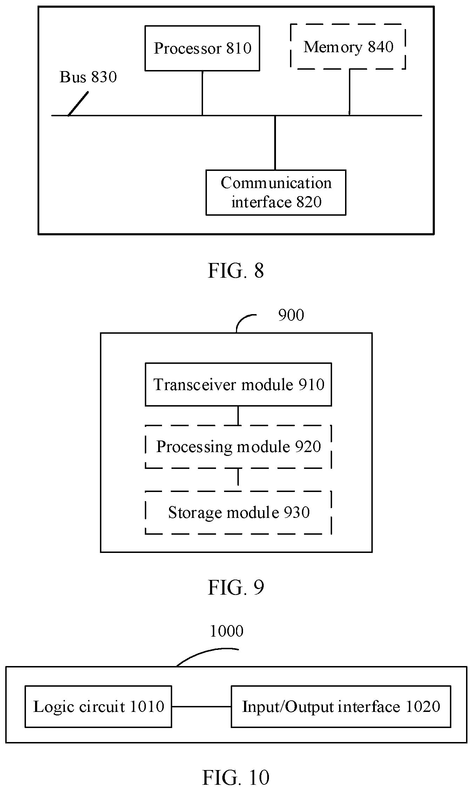

FIG. 8 is a schematic block diagram of a communication apparatus 800 according to an embodiment of this application. The communication apparatus 800 includes a processor 810 and a communication interface 820. The processor 810 and the communication interface 820 are connected to each other through a bus 830. The communication apparatus 800 shown in FIG. 8 may be a first communication apparatus, or may be a second communication apparatus.

Optionally, the communication apparatus 800 further includes a memory 840.

The memory 840 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 840 is configured to store related instructions and data.

The processor 810 may be one or more central processing units (central processing units, CPUs). When the processor 810 is one CPU, the CPU may be a single-core CPU, or may be a multi-core CPU.

When the communication apparatus 800 is the first communication apparatus, the processor 810 in the communication apparatus 800 is configured to read a computer program or instructions stored in the memory 840, and for example, perform the following operations: receiving ranging configuration information from an NB system; and generating a first ranging frame based on the ranging configuration information.

For another example, the following operations may be performed: generating a ranging sequence based on a ranging key and a ranging parameter; and generating a first ranging frame based on the ranging sequence and a preamble code.

For another example, the following operations may be performed: sending a first ranging frame to a second UWB system of a second communication apparatus; receiving a second ranging frame sent by the second UWB system; sending a measurement result of the second ranging frame to a first NB system of the first communication apparatus; and sending the measurement result of the second ranging frame to a second NB system of the second communication apparatus.

The foregoing content is merely used as an example for description. When the communication apparatus 800 is the first communication apparatus, the communication apparatus 800 is responsible for performing the methods or steps related to the first communication apparatus in the foregoing method embodiments.

The foregoing descriptions are merely an example for description. For specific content, refer to the content shown in the foregoing method embodiments. In addition, for implementation of each operation in FIG. 8, refer to corresponding descriptions of the method embodiments shown in FIG. 3 to FIG. 7.

FIG. 9 is a schematic block diagram of a communication apparatus 900 according to an embodiment of this application. The communication apparatus 900 may be a network device or a terminal device (a first communication apparatus may be a network device or a terminal device) in the foregoing embodiments, or may be a chip or a module in the network device or a chip or a module in the terminal device, and is configured to implement the methods in the foregoing embodiments. The communication apparatus 900 includes a transceiver module 910 and a processing module 920. The following describes the transceiver module 910 and the processing module 920 by using an example.

The transceiver module 910 may include a sending module and a receiving module that are respectively configured to implement a sending function or a receiving function in the foregoing method embodiments. The transceiver module 910 may further include a processing module, configured to implement a function other than sending or receiving.

When the communication apparatus 900 is the first communication apparatus, for example, the transceiver module 910 is configured to receive ranging configuration information from an NB system, where the ranging configuration information is determined by a first NB system and a second NB system through negotiation; and the processing module 920 is configured to generate a first ranging frame based on the ranging configuration information.

Optionally, the communication apparatus 900 further includes a storage module 930. The storage module 930 is configured to store a program or code used to perform the foregoing methods.

The foregoing content is merely used as an example for description. When the communication apparatus 900 is the first communication apparatus, the communication apparatus 900 is responsible for performing the methods or steps related to the first communication apparatus in the foregoing method embodiments.

In addition, for implementation of each operation in FIG. 9, refer to corresponding descriptions of the methods shown in the foregoing embodiments. Details are not described herein again.

The apparatus embodiments shown in FIG. 8 and FIG. 9 are used to implement the content described in the foregoing method embodiments shown in FIG. 3 to FIG. 7. Therefore, for specific execution steps and methods of the apparatuses shown in FIG. 8 and FIG. 9, refer to the content described in the foregoing method embodiments.

It should be understood that the foregoing transceiver module may include the sending module and the receiving module. The sending module is configured to perform a sending action of the communication apparatus, and the receiving module is configured to perform a receiving action of the communication apparatus. For ease of description, the sending module and the receiving module are combined into one transceiver module in this embodiment of this application. This is uniformly described herein, and details are not described below again.

FIG. 10 is a diagram of a communication apparatus 1000 according to an embodiment of this application. The communication apparatus 1000 may be configured to implement a function of a network device or a terminal device (when a first communication apparatus is a network device or a terminal device) in the foregoing methods. The communication apparatus 1000 may be a chip in the network device or a chip in the terminal device.

The communication apparatus 1000 includes an input/output interface 1020 and a logic circuit 1010. The input/output interface 1020 may be an input/output circuit. The logic circuit 1010 may be a signal processor, a chip, or another integrated circuit that can implement the method in this application. The input/output interface 1020 is configured to input or output a signal or data.

For example, when the communication apparatus 1000 is the first communication apparatus, the input/output interface 1020 is configured to receive ranging configuration information from a first NB system, where the ranging configuration information is determined by the first NB system and a second NB system through negotiation. The logic circuit 1010 is configured to perform a part or all of the steps in any one of the methods provided in this application. For example, the logic circuit 1010 is configured to generate a first ranging frame based on the ranging configuration information.

In a possible implementation, the logic circuit 1010 executes instructions stored in a memory, to implement a function implemented by the network device or the terminal device.

Optionally, the communication apparatus 1000 further includes the memory. Optionally, the processor and the memory are integrated together.

Optionally, the memory is outside the communication apparatus 1000.

In a possible implementation, the logic circuit 1010 inputs/outputs a message or signaling by using the input/output interface 1020. The logic circuit may be a signal processor, a chip, or another integrated circuit that can implement the methods in embodiments of this application.

The foregoing descriptions of the apparatus in FIG. 10 are merely an example for description. The apparatus can be configured to perform the methods in the foregoing embodiments. For specific content, refer to the descriptions of the foregoing method embodiments. Details are not described herein again.

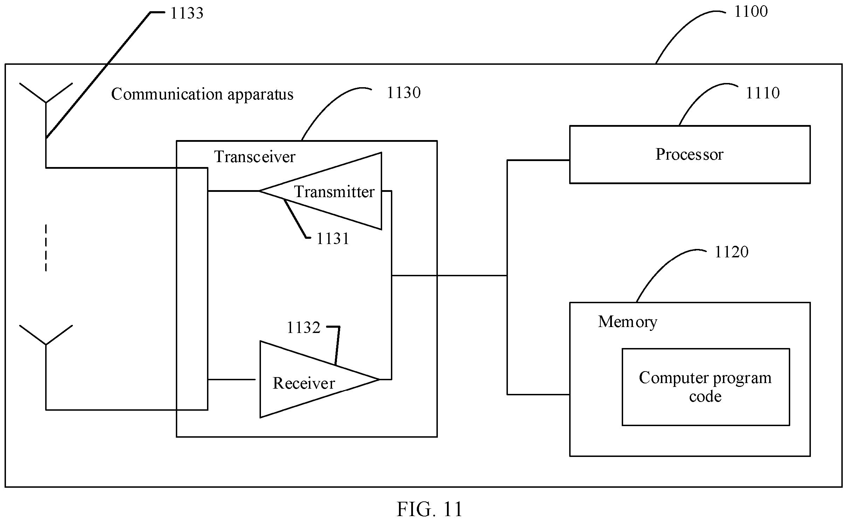

FIG. 11 is a schematic block diagram of a communication apparatus 1100 according to an embodiment of this application. The communication apparatus 1100 may be a network device (when a first communication apparatus is a network device), or may be a chip. The communication apparatus 1100 may be configured to perform an operation performed by a network device in the method embodiments shown in FIG. 3 to FIG. 7.

When the communication apparatus 1100 is the network device, for example, a base station, FIG. 11 is a diagram of a structure of a simplified base station. The base station includes a part 1110, a part 1120, and a part 110. The part 1110 is mainly configured to: perform baseband processing, control the base station, and the like. The part 1110 is usually a control center of the base station, may be usually referred to as a processor, and is configured to control the base station to perform a processing operation on a network device side in the foregoing method embodiments. The part 1120 is mainly configured to store computer program code and data. The part 1130 is mainly configured to receive and send a radio frequency signal, and perform conversion between a radio frequency signal and a baseband signal. The part 1130 may be usually referred to as a transceiver module, a transceiver machine, a transceiver circuit, a transceiver, or the like. The transceiver module in the part 1130 may also be referred to as the transceiver machine, the transceiver, or the like, and includes an antenna 1133 and a radio frequency circuit (not shown in the figure). The radio frequency circuit is mainly configured to perform radio frequency processing.

Optionally, in the part 1130, a component configured to implement a receiving function may be considered as a receiver, and a component configured to implement a sending function may be considered as a transmitter. In other words, the part 1130 includes a receiver 1132 and a transmitter 1131. The receiver may also be referred to as a receiving module, a receiver machine, a receiver circuit, or the like, and the transmitter may be referred to as a transmitting module, a transmitter machine, a transmitter circuit, or the like.

The part 1110 and the part 1120 may include one or more boards, and each board may include one or more processors and one or more memories. The processor is configured to read and execute a program in a memory, to implement a baseband processing function and control the base station. If there are a plurality of boards, the boards may be interconnected to improve a processing capability. In an optional implementation, the plurality of boards may share one or more processors, or the plurality of boards share one or more memories, or the plurality of boards share one or more processors at the same time.

For example, in an implementation, the transceiver module in the part 1130 is configured to perform a receiving and sending-related process performed by the network device in the embodiments shown in FIG. 3 to FIG. 7. The processor in the part 1110 is configured to perform a processing-related process performed by the network device in the embodiments shown in FIG. 3 to FIG. 7.

In another implementation, the processor in the part 1110 is configured to perform a processing-related process performed by a communication device in the embodiments shown in FIG. 3 to FIG. 7.

In another implementation, the transceiver module in the part 1130 is configured to perform a receiving and sending-related process performed by a communication device in the embodiments shown in FIG. 3 to FIG. 7.

It should be understood that FIG. 11 is merely an example rather than a limitation. The network device including the processor, the memory, and the transceiver may not depend on the structures shown in FIG. 8 to FIG. 10.

When the communication apparatus 1100 is the chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as output of the chip, and a receiving operation performed by the network device in the foregoing method embodiments may be understood as input of the chip.

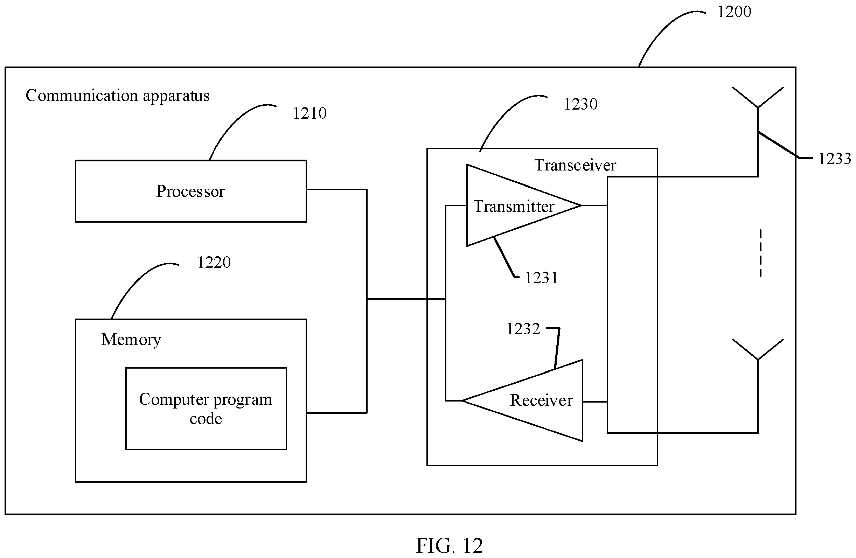

FIG. 12 is a schematic block diagram of a communication apparatus 1200 according to an embodiment of this application. The communication apparatus 1200 may be a terminal device (when a first communication apparatus is a terminal device), a processor of the terminal device, or a chip. The communication apparatus 1200 may be configured to perform an operation performed by a terminal device or a communication device in the foregoing method embodiments.

When the communication apparatus 1200 is the terminal device, FIG. 12 is a diagram of a structure of a simplified terminal device. As shown in FIG. 12, the terminal device includes a processor, a memory, and a transceiver. The memory may store computer program code. The transceiver includes a transmitter 1231, a receiver 1232, a radio frequency circuit (not shown in the figure), an antenna 1233, and an input/output apparatus (not shown in the figure).

The processor is mainly configured to: process a communication protocol and communication data, control the terminal device, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When data needs to be sent, the processor performs baseband processing on to-be-sent data, and outputs a baseband signal to the radio frequency circuit. After performing radio frequency processing on the baseband signal, the radio frequency circuit sends a radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 12 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 12, the terminal device includes a processor 1210, a memory 1220, and a transceiver 1230. The processor 1210 may also be referred to as a processing unit, a processing board, a processing module, a processing apparatus, or the like. The transceiver 1230 may also be referred to as a transceiver unit, a transceiver machine, a transceiver apparatus, or the like.

Optionally, in the transceiver 1230, a component configured to implement a receiving function may be considered as a receiving module, and a component configured to implement a sending function may be considered as a sending module. In other words, the transceiver 1230 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

For example, in an implementation, the processor 1210 is configured to perform a processing action on a terminal device side in the embodiments shown in FIG. 3 to FIG. 7, and the transceiver 1230 is configured to perform receiving and sending actions on the terminal device side in FIG. 3 to FIG. 7.

For example, in an implementation, the processor 1210 is configured to perform a processing action on a terminal device side in the embodiments shown in FIG. 3 to FIG. 7, and the transceiver 1230 is configured to perform receiving and sending actions on the terminal device side in FIG. 3 to FIG. 7.

It should be understood that FIG. 12 is merely an example rather than a limitation. The terminal device including the transceiver module and the processing module may not depend on the structures shown in FIG. 8 to FIG. 10.

When the communication apparatus 1200 is the chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as output of the chip, and a receiving operation performed by the terminal device in the foregoing method embodiments may be understood as input of the chip.

This application further provides a chip, including a processor, configured to invoke, from a memory, and run instructions stored in the memory, for a communication device in which the chip is installed to perform the methods in the foregoing examples.

This application further provides another chip, including an input interface, an output interface, and a processor. The input interface, the output interface, and the processor are connected through an internal connection path, the processor is configured to execute code in a memory, and when the code is executed, the processor is configured to perform the methods in the foregoing examples. Optionally, the chip further includes the memory. The memory is configured to store a computer program or code.

This application further provides a processor, configured to be coupled to a memory, and configured to perform the method and the function that are relates to a network device or a terminal device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

In the descriptions of embodiments of this application, unless otherwise specified, "a plurality of" means two or more. "At least one of the following items (pieces)" or a similar expression thereof refers to any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

In addition, to clearly describe the technical solutions of embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to represent an example, an illustration, or a description.

Any embodiment or design solution described as an "example" or "for example" in embodiments of this application should not be explained as being more preferred or having more advantages than another embodiment or design solution. Exactly, use of the words such as "example" or "for example" is intended to present a related concept in a specific manner for ease of understanding.

Unless otherwise specified, "/" in the descriptions of embodiments of this application represents an "or" relationship between associated objects. For example, A/B may represent A or B. In this application, "and/or" represents only an association relationship for describing associated objects and represents that three relationships may exist. For example, A and/or B may represent the following three cases: Only A exists, both A and B exist, and only B exists. A and B may be singular or plural.

It should be understood that "one embodiment" or "an embodiment" mentioned throughout the specification means that particular features, structures, or characteristics related to the embodiment are included in at least one embodiment of this application.

Therefore, "in one embodiment" or "in an embodiment" appearing throughout the specification does not necessarily refer to a same embodiment. In addition, the particular features, structures, or characteristics may be combined in one or more embodiments in any proper manner.

Sequence numbers of the foregoing processes do not mean execution sequences in various embodiments of this application. The execution sequences of the processes should be determined based on functions and internal logic of the processes, and should not be construed as any limitation on implementation processes of embodiments of this application.

It may be understood that an "embodiment" used throughout this specification means that particular features, structures, or characteristics related to this embodiment are included in at least one embodiment of this application.

Therefore, embodiments in the entire specification do not necessarily refer to a same embodiment. In addition, the particular features, structures, or characteristics may be combined in one or more embodiments in any proper manner.

It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be another division manner during actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, in other words, may be located in one position, or may be distributed on a plurality of network units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When functions are implemented in a form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A ranging method, wherein the ranging method is applied to a first communication apparatus, and the first communication apparatus comprises a first ultra-wideband system and a first narrowband system; and the method comprises:
receiving, by the first ultra-wideband system, ranging configuration information from the first narrowband system, wherein the ranging configuration information is determined by the first narrowband system and a second narrowband system of a second communication apparatus through negotiation; and
generating, by the first ultra-wideband system, a first ranging frame based on the ranging configuration information, wherein the first ranging frame is used to measure a distance between the first communication apparatus and the second communication apparatus.

2. The method according to claim 1, wherein the ranging configuration information comprises a ranging key and a ranging parameter.

3. The method according to claim 2, wherein the ranging key comprises a session key.

4. The method according to any one of claims 1 to 3, wherein the generating, by the first ultra-wideband system, a first ranging frame based on the ranging configuration information comprises:
generating, by the first ultra-wideband system, a ranging sequence based on the ranging key and the ranging parameter; and
generating, by the first ultra-wideband system, the first ranging frame based on the ranging sequence and a preamble code.

5. The method according to claim 4, wherein the generating, by the first ultra-wideband system, a ranging sequence based on the ranging key and the ranging parameter comprises:
generating, by the first ultra-wideband system, a ranging sequence value and a ranging sequence key based on the ranging key and the ranging parameter; and
generating, by the first ultra-wideband system, the ranging sequence based on the ranging sequence value and the ranging sequence key.

6. The method according to claim 5, wherein the generating, by the first ultra-wideband system, a ranging sequence value and a ranging sequence key based on the ranging key and the ranging parameter comprises:
generating, by the first ultra-wideband system, the ranging sequence key based on the ranging key and first information, wherein the first information comprises a ranging sequence text, the ranging sequence text is determined based on the ranging key and second information, and the second information is determined based on the ranging parameter;
generating, by the first ultra-wideband system, the ranging sequence value based on the ranging key and third information, wherein the third information comprises the ranging sequence text; and
generating, by the first ultra-wideband system, the ranging sequence based on the ranging sequence key and the ranging sequence value.

7. The method according to any one of claims 1 to 6, wherein the method further comprises:
sending, by the first ultra-wideband system, the first ranging frame to a second ultra-wideband system of the second communication apparatus; and
receiving, by the first ultra-wideband system, a second ranging frame from the second ultra-wideband system.

8. The method according to claim 7, wherein the method further comprises:
determining, by the first ultra-wideband system, a measurement result of the second ranging frame; and
sending, by the first ultra-wideband system, the measurement result of the second ranging frame to the first narrowband system.

9. The method according to claim 8, wherein the method further comprises:
sending, by the first narrowband system, the measurement result of the second ranging frame to the second narrowband system.

10. The method according to claim 9, wherein before the receiving, by the first ultra-wideband system, ranging configuration information from the first narrowband system, the method further comprises:
sending, by the first narrowband system, fourth information to the second narrowband system, wherein
the fourth information comprises the ranging key and the ranging parameter; or
the fourth information comprises information used to generate the ranging key and the ranging parameter.

11. A communication apparatus, wherein the communication apparatus comprises a first ultra-wideband system and a first narrowband system, and the first ultra-wideband system comprises a first transceiver module and a first processing module, wherein
the first transceiver module is configured to receive ranging configuration information from the first narrowband system, wherein the ranging configuration information is determined by the first narrowband system and a second narrowband system of a second communication apparatus through negotiation; and
the first processing module is configured to generate a first ranging frame based on the ranging configuration information, wherein the first ranging frame is used to measure a distance between the communication apparatus and the second communication apparatus.

12. The apparatus according to claim 11, wherein the ranging configuration information comprises a ranging key and a ranging parameter.

13. The apparatus according to claim 12, wherein the ranging key comprises a session key.

14. The apparatus according to any one of claims 11 to 13, wherein
the first processing module is configured to generate a ranging sequence based on the ranging key and the ranging parameter; and
the first processing module is further configured to generate the first ranging frame based on the ranging sequence and a preamble code.

15. The apparatus according to claim 14, wherein
the first processing module is configured to generate a ranging sequence value and a ranging sequence key based on the ranging key and the ranging parameter; and
the first processing module is configured to generate the ranging sequence based on the ranging sequence value and the ranging sequence key.

16. The apparatus according to claim 15, wherein
the first processing module is configured to generate the ranging sequence key based on the ranging key and first information, wherein the first information comprises a ranging sequence text, the ranging sequence text is determined based on the ranging key and the first information, and the second information is determined based on the ranging parameter;
the first processing module is further configured to generate the ranging sequence value based on the ranging key and third information, wherein the third information comprises the ranging sequence text; and
the first processing module is further configured to generate the ranging sequence based on the ranging sequence key and the ranging sequence value.

17. The apparatus according to any one of claims 11 to 16, wherein
the first transceiver module is further configured to send the first ranging frame to a second ultra-wideband system of the second communication apparatus; and
the first transceiver module is further configured to receive a second ranging frame from the second ultra-wideband system.

18. The apparatus according to claim 17, wherein
the first processing module is further configured to determine a measurement result of the second ranging frame; and
the first transceiver module is further configured to send the measurement result of the second ranging frame to the first narrowband system.

19. The apparatus according to claim 18, wherein the first narrowband system comprises a second transceiver module, wherein
the second transceiver module is configured to send the measurement result of the second ranging frame to the second narrowband system.

20. The apparatus according to any one of claims 11 to 19, wherein
the second transceiver module is further configured to send fourth information to the second narrowband system, wherein
the fourth information comprises the ranging key and the ranging parameter; or
the fourth information comprises information used to generate the ranging key and the ranging parameter.

21. A communication apparatus, comprising a processor, wherein the processor is coupled to a memory, and the processor is configured to execute a computer program or instructions, so that the communication apparatus performs the method according to any one of claims 1 to 10.

22. A communication apparatus, comprising a logic circuit and an input/output interface, wherein the logic circuit is configured to execute a computer program or instructions, so that the communication apparatus performs the method according to any one of claims 1 to 10.

23. A computer-readable storage medium, comprising a computer program or instructions, wherein when the computer program or the instructions are run on a computer, the computer is enabled to perform the method according to any one of claims 1 to 10.

24. A computer program product, comprising instructions, wherein when the instructions are run on a computer, the computer is enabled to perform the method according to any one of claims 1 to 10.
